## Europäisches Patentamt

## European Patent Office

## Office européen des brevets

(19)

(11) Publication number: **0 205 204**
**B1**

(12)

# EUROPEAN PATENT SPECIFICATION

(45) Date of publication of the patent specification:
**06.09.89**

(51) Int. Cl.⁴: **G01F 1/44, G01F 1/36**

(21) Application number: **86200926.3**

(22) Date of filing: **27.05.86**

(54) Apparatus for measuring a gas mass flowing per unit of time through a pipe.

(30) Priority: **29.05.85 NL 8501529**

(43) Date of publication of application:
**17.12.86 Bulletin 86/51**

(45) Publication of the grant of the patent:
**06.09.89 Bulletin 89/36**

(84) Designated Contracting States:
**AT BE CH DE FR GB IT LI LU NL SE**

(56) References cited:
**US-A- 2 675 020**
**US-A- 3 524 344**

(73) Proprietor: **NEDERLANDSE CENTRALE ORGANISATIE VOOR TOEGEPAST-NATUURWETENSCHAPPELIJK ONDERZOEK, Juliana van Stolberglaan 148, NL-2595 CL The Hague(NL)**

(72) Inventor: **Korting, Paul Aloysius Omere Gijsbrecht, Lange Weteringkade 3, NL-2295 RM Kwintsheul(NL)**

(74) Representative: **van der Beek, George Frans, Ir. et al, Nederlandsch Octrooibureau Scheveningseweg 82 P.O. Box 29720, NL-2502 LS 's-Gravenhage(NL)**

## Description

The invention relates to an apparatus for measuring a gas mass flowing per unit of time through a pipe, which apparatus is provided with a constriction intended for the passage of the gas through it at the speed of sound, a pin inserted into the constriction, and means for moving the pin a greater or lesser distance into the constriction and thereby varying the smallest section of the constriction.

An apparatus of this kind is known from Dutch Preliminary Published Patent Application No. 77.01548.

For many industrial and scientific applications it is desirable to be able to measure accurately the mass flow, that is to say the mass of a gas flowing per unit of time through a pipe. Many known gas meters measure the flow in cubic metres per hour. In order to be able to determine this flow accurately, the density and temperature would have to be known. In the case of unvarying flow conditions, however, measurements of mass flow made with simple calibrated apertures are accepted. Meters available commercially for measuring gas mass flow have the disadvantages of limited accuracy and long response times.

The known apparatus mentioned above provides a solution to this problem. In order to achieve the speed of sound at the constriction, it is first necessary for the pressure upstream of the constriction to be at least approximately twice that downstream thereof. The mass flow of the gas under sonic conditions through the smallest section of the constriction is directly proportional to the total pressure upstream of the constriction, directly proportional to the smallest area of the constriction (throat area), and inversely proportional to the root of the total temperature of the gas upstream of the constriction.

In the formula:

$$M = \Gamma \cdot P_{t_1} \cdot \frac{A_t}{\sqrt{RT_{t_1}}}$$

$M$ = gas mass flow
$\Gamma$ = Vandenkerckhove function.
$P_{t1}$ = total pressure upstream of the constriction.
$A_t$ = area of sonic section.
$R$ = gas constant of the gas in question.
$T_{t1}$ = total temperature upstream of the constriction.

If the area of the sonic section and the nature of the gas are known, only the total pressure and temperature will have to be measured in order to enable the mass flow to be calculated. On the other hand, with a determined total pressure and temperature the mass flow can be controlled by varying the smallest section of the constriction. The means for accurately determining the position of the pin consist for example of a servomotor or a vernier.

The measurement results with the known apparatus leave much to be desired, since for an accurate measurement of the total pressure and temperature upstream of the constriction it is important that the gas should for the most part have come to rest. In the case of the known apparatus this is not the case. The difference between static pressure and temperature on the one hand, and total pressure and temperature on the other hand, is then also definitely not negligible. Another disadvantage of the known apparatus is that losses in the total pressure are fairly great because of the shape of the constriction.

The invention seeks to obviate these shortcomings and to this end the apparatus first referred to above is characterized in that upstream of the constriction a a stilling chamber of relatively large section in relation to the section of the pipe is disposed, that the stilling chamber contains means for measuring the temperature and pressure, and that the constriction is bounded by a truncated De Laval jet pipe.

The stilling chamber ensures that the gas will come to rest, so that the difference between static pressure and temperature on the one hand, and total pressure and temperature on the other hand, is very small. As a consequence of the shape of the constriction the losses of total pressure are restricted to a minimum. The supersonic acceleration of the gas flow will of course be slightly lower than in the case of a completely divergent jet pipe.

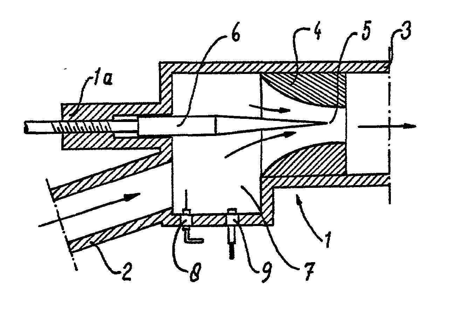

The invention will now be explained with reference to the drawing, which shows diagrammatically a section of a meter for installation in a gas pipe for the measurement of the gas mass flowing through the pipe per unit of time.

The measuring instrument illustrated comprises a casing 1 consisting of an inlet part 2 and an outlet part 3. A constriction member 4 in the form of a truncated De Laval jet pipe is disposed in the casing.

A conically tapering pin 6 extends into the constriction. This pin is screwed into a projection 1a extending from the casing 1. In order to facilitate the displacement of the pin when high pressures prevail in the measuring instrument, the pin is provided with a pressure duct and a screw arrangement ensuring that the pressure load on the screwthread and therefore the friction are minimal.

Between the inlet part 2 and the constriction member 4 is provided a stilling chamber of appreciably larger section than the inlet part.

A thermocouple 8 for measuring the temperature and a pressure measuring means 9, such as a piezoresistive element, for measuring pressure extend through the casing wall into the stilling chamber.

In the stilling chamber the gas velocity is very low, as is necessary in order to obtain dependable measurement results. With a speed of 10 metres per second or less a negligible difference exists between the total pressure and temperature, and the static pressure and temperature. The mass flow per unit of time which is to be calculated or controlled, as the case may be, is in fact a function of the total pressure and temperature and not of the static pressure and temperature. The measurement of the static pressure and temperature in the stilling chamber can thus without difficulty be taken as a measurement of the total pressure and temperature.

The initial difference between the pressures upstream and downstream of the constriction 5 is selected so that the gas at least reaches the speed of sound in the constriction. The area of the sonic section can be varied by inserting the pin 6 a greater or lesser distance into the constriction 5. The area of the sonic section is dependent not only on the position of the pin 6, but also on the curve in accordance with which the cross-section of the pin decreases in the direction of the constriction. Any curve may be used, but for the calculation of the gas mass flow per unit of time it must be known. The position of the pin can be determined by means which are not illustrated, such as for example a servomotor. From this position and the aforesaid known curve the area of the sonic section can be obtained. This value and the measured values of total pressure and temperature can be used for calculating mass flow per unit of time. These values are for example fed to a microprocessor or computer in which the calculation is made in accordance with the previously mentioned formula:

$$M = \Gamma \cdot P_{t_1} \cdot \frac{A_t}{\sqrt{RT_{t_1}}}$$

where $\Gamma$ and $R$ are known for a determined gas.

It is important that the mass flow can be very easily controlled by displacing the pin, while the value of the mass flow varied by the displacement can be directly calculated and for example digitally displayed.

The measuring instrument described will work only if the gas flows at at least the speed of sound directly downstream of the constriction, since the speed in the constriction is then substantially constant while the flow may vary. On the other hand, with a subsonic speed of the gas while the flow is maintained an acceleration of the gas may occur.

Important advantages of the measuring instrument with a sonic opening of variable sectional area are that it can be used within a very wide range of temperature, pressure and flow without any risk of failure, and that the mass flow per unit of time can not only be measured but also controlled. In addition, the accuracy of the measurement is great (for example better than 1.8%) and response times are short (for example 10 ms).

For the accurate measurement and control of mass flow it is important that the measuring instrument should be provided with a sonic constriction whose section is variable, and that upstream of the constriction a stilling chamber of relatively large section in comparison with the section of the pipe should be provided. Various modifications are possible within the scope of the invention.

## Claims

1. Apparatus for measuring a gas mass flowing through a pipe per unit of time, which apparatus is provided with a constriction intended for the passage of the gas through it at the speed of sound, a pin inserted into the constriction, and means for moving the pin a greater or lesser distance into the constriction and thereby varying the smallest section of the constriction, characterized in that upstream of the constriction a stilling chamber (7) of relatively large section in relation to the section of the pipe is disposed, that the stilling chamber contains means for measuring the temperature and pressure (8,9), and that the constriction is bounded by a truncated De Laval jet pipe (4).

## Patentansprüche

1. Meßvorrichtung für eine durch ein Rohr pro Zeiteinheit strömende Gasmenge, mit einer Verengung für eine Gasdurchströmung mit Schallgeschwindigkeit, mit einem in diese Verengung eingeführten Dorn und mit einer Verstelleinrichtung, durch die der Dorn mehr und weniger weit in die Verengung eingeführt und dadurch der kleinste Querschnitt der Verengung verändert werden kann, dadurch gekennzeichnet, daß in Strömungsrichtung gesehen vor der Verengung eine Beruhigungskammer (7) angeordnet ist, die einen im Verhältnis zum Rohrquerschnitt relativ großen Querschnitt aufweist und Temperatur- sowie Druck-Meßeinrichtungen (8, 9) enthält, und daß die Verengung durch einen De Laval-Strahlrohrabschnitt gebildet ist.

## Revendications

1. Appareil permettant de mesurer une masse de gaz s'écoulant dans une tuyauterie par unité de temps, cet appareil comprenant un étranglement destiné à être traversé par le gaz à la vitesse du son, une aiguille introduite dans l'étranglement et des moyens permettant de faire pénétrer l'aiguille sur une plus ou moins grande distance dans l'étranglement et de faire ainsi varier la plus petite section de celui-ci, caractérisé en ce qu'une chambre de tranquillisation (7) à section relativement grande par rapport à la section de la tuyauterie est disposée en amont de l'étranglement, en ce que la chambre de tranquillisation contient des moyens (8, 9) servant à mesurer la température et la pression et en ce que l'étranglement est délimité par une tuyère de Laval tronquée (4).